# EUROPÄISCHE PATENTSCHRIFT

(11) **EP 0 952 459 B1**
(45) Veröffentlichungstag und Bekanntmachung des Hinweises auf die Patenterteilung: **25.05.2011**
(21) Anmeldenummer: 99105057.6
(22) Anmeldetag: 23.03.1999
(51) Int. Cl.: G01S 13/93, G01S 13/87

(54) **Vorrichtung zur Objekterfassung für Kraftfahrzeuge**
Device for detecting objects for vehicles
Dispositif de détection d'objets pour véhicules

(30) Priorität: 02.10.1998 DE 19845568; 23.04.1998 DE 19818089
(43) Veröffentlichungstag der Anmeldung: 27.10.1999
(60) Teilanmeldung: 06021819.5
(73) Patentinhaber: Volkswagen Aktiengesellschaft, 38436 Wolfsburg (DE)
(72) Erfinder: Mai, Rudolf, 38442 Wolfsburg (DE); Ensslen, Arnold, Dipl.-Ing., 38446 Wolfsburg (DE); Zander, André, 38820 Halberstadt (DE); Bergholz, Ralf, Dr., 38108 Braunschweig (DE); Ruchatz, Thomas, D-38165 Lehre (DE); Andreas, Peter, D-38518 Gifhorn (DE); Mende, Ralph, D-38106 Braunschweig (DE)
(74) Vertreter: Patentanwälte Bressel und Partner

(56) Entgegenhaltungen:
- WO-A-98/00728
- DE-A- 3 827 729
- DE-A- 19 501 612
- DE-A- 19 523 805
- DE-A- 19 637 245
- DE-A1- 19 638 387
- DE-C- 4 402 791
- GB-A- 2 309 555
- US-A- 4 011 563
- US-A- 5 585 798

## Beschreibung

Die Erfindung betrifft eine Vorrichtung zur Objekterfassung für Kraftfahrzeuge gemäß dem Oberbegriff des Patentanspruchs 1 und ein Verfahren zur Verfolgung von Objekten.

Aufgrund der zunehmenden Verkehrsdichte steigen die Anforderungen hinsichtlich der Wahrnehmung des Verkehrsgeschehens an einen Kraftfahrzeugführer kontinuierlich an. Daher wurden bereits vielfältige Anstrengungen unternommen, Fahrer-Assistenzsysteme zu schaffen, um den Kraftfahrzeugführer zu entlasten. Eine sehr wichtige Information für den Kraftfahrzeugführer ist der Abstand eines Objektes sowie die Bewegung des Objektes zum Kraftfahrzeug. Diese Daten werden beispielsweise für automatische Abstandsregelungen, aktive und passive Kollisionsverhinderungseinrichtungen oder für eine Precrash-Sensorik zur frühzeitigen Auslösung eines passiven Fahrzeuginsassenrückhaltesystems benötigt.

Aus der DE 38 27 729 ist eine Kollisionswarneinrichtung für Kraftfahrzeuge bekannt, insbesondere zur Vermeidung von Kollisionen mit stehenden Hindernissen im Nahbereich eines Kraftfahrzeuges, mit einer Abstandsmeßeinrichtung zur berührungslosen Abstands-Lageerkennung für ein Objekt im Bereich des Kraftfahrzeuges, wobei wenigstens ein Sensor zur Erfassung der einem bestimmten, gerade vorliegenden Fahrzeugbetriebszustand entsprechenden Fahrzeugkurs vorgesehen ist und die entsprechenden Bewegungssignale abgibt, daß die Abstands- und Lagesignale sowie die Bewegungssignale einer Auswerteeinheit zuführt werden, die anhand dieser Signale unter Berücksichtigung der fahrzeugspezifischen Gegebenheiten errechnet, ob eine Kollision mit dem erfaßten Objekt möglich ist, wobei das Ergebnis auf einer Anzeigeeinheit darstellbar ist. Besonders vorteilhaft wird als Abstandsmeßeinrichtung je eine Sende-/Empfangseinheit für Ultraschallsignale und für eine schmale Sendekeule eines Infrarot-Strahls an diagonal gegenüberliegenden Ecken eines Kraftfahrzeuges angebracht. Der Infrarot-Strahl dient zur Lageerkennung und Zuordnung einer Winkelposition für ein Objekt in je einem 270°-Winkelbereich vor bzw. hinter dem Kraftfahrzeug und seitlich davon. Mit der schmalen Sendekeule des Infrarot-Strahls wird jeweils dieser Bereich schnell abgetastet. Zudem sind die 270°-Winkelbereiche in jeweils drei 90°-Bereiche unterteilt, die von je einer Ultraschallmeßeinheit umfaßt sind. Damit wird die hohe Genauigkeit der Ultraschallmessung bei der Abstandsmessung und die schnellere Datenerfassung mit Infrarotlicht zur Lagebestimmung ausgenützt , wobei der gesamte Bereich um ein Fahrzeug herum erfaßt wird.

Aus der DE 44 23 966 ist ein Hinderniserfassungssystem bekannt, welches eine Hinderniserfassungseinrichtung, z.B. einen Laserradar, zur Erfassung einer dynamischen Relativität des Fahrzeuges in bezug auf jedes Hindernis vor dem Fahrzeug aufweist, die mindestens durch eine Geschwindigkeit und eine Richtung des Hindernisses dargestellt wird. Das Gefahrenniveau der erfaßten Hindernisse wird entsprechend der dynamischen Relativität bestimmt, und die Gefahrenbeurteilung bei einer Frequenz durchgeführt, die entsprechend dem Gefahrenniveau ansteigend oder abfallend verändert wird. Insbesondere wird ein sich bewegendes Hindernis als hohes Gefahrenniveau eingestuft, wenn es sich relativ zum Fahrzeug annähert, wenn ein Abstand von dem Fahrzeug geringer als ein vorbestimmter Abstand ist und/oder wenn es sich auf der vorausgehenden Bahn befindet, auf der das Fahrzeug fährt. Andererseits wird das Gefahrenniveau eines Hindernisses als niedrig bestimmt, wenn das Hindernis stillsteht, wenn es sich weit vom Fahrzeug wegbewegt, wenn es sich in einem Abstand vom Fahrzeug befindet, der größer als der vorbestimmte Abstand ist oder wenn es sich nicht auf der vorausgehenden Bahn befindet. Mit dem Hinderniserfassungsystem wird eine Gefahrenbeurteilung nicht direkt auf der Grundlage der dynamischen Relativität zwischen dem Fahrzeug und dem Objekt vorgenommen, sondern das Gefahrenniveau wird entsprechend der dynamischen Relativität bestimmt. Die Frequenz der Operation für die Gefahrenbeurteilung eines Objektes wird erhöht, wenn das Objekt ein hohes Gefahrenniveau darstellt oder erniedrigt, wenn es ein niedriges Gefahrenniveau darstellt. D.h., die Operation der Gefahrenbeurteilung wird nicht bei gleichförmiger Frequenz für alle Hindernisse, sondern bei unterschiedlichen Frequenzen entsprechend den Gefahrenniveaus durchgeführt. Dies ermöglicht eine Steigerung der Belastung, die die CPU unterworfen werden kann. Infolge der niedrigen Frequenz der Gefahrenbeurteilungsoperation für Hindernisse mit niedrigem Gefahrenniveau kann die CPU andererseits mit einer hohen Frequenz für Hindernisse mit hohem Gefahrenniveau arbeiten, so daß sie ohne irgendeine Verzögerung in der Operation und der Beantwortung arbeitet, so daß eine zeitgerechte und schnelle Steuerung des Fahrzeugs zur Vermeidung des Hindernisses geschaffen wird.

Aus der DE 195 01 612 ist eine Vorrichtung zur Objekterkennung mit zwei Meßvorrichtungen bekannt. Eine erste besitzt eine kleine Reichweite mit einer absolut gesehen hohen Meßgenauigkeit, während die zweite Meßvorrichtung eine große Reichweite mit einem Auflösungsvermögen besitzt, das in der Größenordnung der Reichweite der ersten Meßvorrichtung liegt. Vorzugsweise sollen die beiden Meßvorrichtungen mittels bereits im Kraftfahrzeug befindlicher Sensoren realisiert werden, beispielsweise eine Abstands-Meßvorrichtung als Laser- oder Radarbasis für große Entfernungen und eine Ultraschall-Meßvorrichtung, die als Einparkhilfe verwendet wird. Das Zusammenspiel der beiden Meßvorrichtungen ist auf unterschiedliche Weise möglich. So kann die Dominanz der einen Meßvorrichtung abhängig von der Entfernung eines Objektes eingestellt werden. Dabei kann man über eine gegenläufige lineare oder nichtlineare Gewichtung des Nah- und Fernbereichs-Sensors den Abstandsmeßwert bestimmen. Ausgehend von einer Betriebsweise, bei der beide Meßvorrichtungen gleichberechtigt arbeiten, wird bei Eintritt eines Objekts in den Meßbereich der einen Meßvorrichtung diese bevorzugt wirksam und die andere Meßvorrichtung ausgeschaltet. Insbesondere dann, wenn es sich bei der dominanten Meßvorrichtung um diejenige handelt, die den großen Entfernungsbereich abdeckt, kann die andere Meßvorrichtung mit untergeordneter Bedeutung wirksam bleiben. Es lassen sich dann überraschend in den Meßbereich der ersten Meßvorrichtung eintretende Hindernisse noch erkennen und entsprechende Gegenmaßnahmen einleiten. Die Dominanz der jeweiligen wirksamen Meßvorrichtung kann aber auch selbsttätig in Abhängigkeit von der Fahrzeuggeschwindigkeit eingestellt werden.

Aus der DE 195 23 805 ist eine Mikrostreifenantenne zur Verwendung in einem Fahrzeugkollisionssystem bekannt, umfassend eine leitende Platte und ein isolierendes Substrat, das auf einer Seite der Platte angebracht ist und eine dielektische Wellenlänge bei der gewünschten hohen Frequenz besitzt, eine planare Mikrowellen-Streifenschaltung, die auf dem Substrat angeordnet ist und aus einer Hauptleitung geformt ist, entlang der in gleichen Intervallen eine Vielzahl von Zweigleitungen in regelmäßigem Abstand verteilt ist, die mit Verbindungen mit der Hauptleitung verbunden sind und von diesem aus in rechtem Winkel verlaufen, ein Feld planarer strahlender Elemente, das auf dem Substrat angeordnet ist, wobei die Elemente entlang Spalten in regelmäßigen Intervallen eines ganzen Vielfachen der dielektrischen Wellenlänge entlang einer Seite der Zweigleitungen verteilt sind, wobei jedes strahlende Element mit einer benachbarten Zweigleitung verbunden ist, wobei die Zweigleitung wenigstens einen Einspeisepunkt besitzt, der so angeordnet ist, daß er eine gewünschte Leistungsverteilung von der Hauptleitung in die jeweiligen damit verbundenen Zweigleitungen bewirkt, um einen Strahl mit einer Strahlbreite und mit niedrigen Seitenkeulen herzustellen, wobei jede der Zweigleitungen die Impedanz an der Verbindung der Zweigleitung mit der Hauptleitung beeinflußt, die Hauptleitung eine Vielzahl von Streifen-Überträgern enthält, die jeweils mit Abstand zwischen den Verbindungen angeordnet und so ausgewählt sind, daß sie Reflexionen von den Verbindungen minimieren. Die Zweigleitungen sind mit der Hauptleitung über Kopplungsleiter verbunden, deren Mikrowelleneigenschaften so ausgewählt sind, daß sie die Leitungsmenge bestimmen, die von der Hauptleitung in die Zweigleitungen, mit denen die Kopplungsleiter verbunden sind, eingekoppelt wird.

Aus der DE 196 38 387 A1 ist ein Verfahren zur Kollisionserkennung von Fahrzeugen bekannt, bei dem zwei Doppler-Radareinrichtung verwendet werden, die räumlich voneinander getrennt an einem Fahrzeug angeordnet sind und aus deren Ausgangssignalen zu aufeinander folgenden Zeitpunkten die Relativgeschwindigkeiten eines Objekts bezüglich der Doppler-Radar-Einrichtungen und aus dem Verlauf der Relativgeschwindigkeiten die Bewegungsbahn des Objekts bestimmt wird.

Aus der US 4,011,563 ist ein System zur Detektion einer Präsenz und einer Entfernung von Objekten innerhalb eines vorbestimmten maximalen Erfassungsbereiches von einem Fahrzeug in dessen Fahrtrichtung bekannt. Die Fahrtrichtung weist einen Kurvenradius auf. Das System umfasst erste Mittel zur Erzeugung eines Signals in Fahrtrichtung des Fahrzeugs, wobei das Signal von den Objekten zurück zum Fahrzeug reflektiert wird. Weiter umfasst das System zweite Mittel zum Empfangen der reflektierten Signale. Hieraus bestimmt das System eine Präsenz und Entfernung der Objekte von dem Fahrzeug. Weiter umfasst das System dritte Mittel zur Erzeugung eines Signales, welches bezeichnend für den Kurvenradius der Fahrtrichtung ist. Weiter umfasst das Fahrzeug vierte Mittel zur Änderung des maximalen Erfassungsbereiches des Systems in Abhängigkeit von dem Signal, welches bezeichnend für den Kurvenradius ist.

Nachteilig an allen bekannten Vorrichtungen zur Objekterfassung ist, daß diese entweder nur speziell auf eine bestimmte Zielstellung abgestimmt sind oder aber nicht ausreichend flexibel für unterschiedliche Steuergeräte des Kraftfahrzeuges verwendbar sind.

Der Erfindung liegt daher das technische Problem zugrunde, eine Vorrichtung zur Objekterfassung in einem Kraftfahrzeug, die Daten für unterschiedliche Assistenz-Vorrichtungen bereitstellen kann und flexibel wechselnde Gegebenheiten anpaßbar ist und ein Verfahren zur Verfolgung von Objekten zu schaffen.

Die Lösung des technischen Problems ergibt sich durch die Merkmale des Patentanspruchs 1. Durch die wahlweise Ansteuerbarkeit der Abstands-Sensoren durch die Auswerteeinheit, wobei Meßwiederholfrequenz und Reichweite und Auflösung und Betriebsart der Abstandssensoren veränderbar sind und eine Rechenleistung der Auswerteeinheit für ausgewählte Abstands-Sensoren erhöhbar und für die übrigen Abstands-Sensoren reduzierbar ist, kann die Vorrichtung zur Objekterfassung gleichzeitig oder nacheinander Daten für verschiedene Fahrer-Assistenz-Vorrichtungen ,wie beispielsweise Fahrer-Rückhalte-Systeme, ADR-Systeme, Fahrspurwechsel-Einrichtungen, Fahrspurerkennungs-Einrichtungen, Einparkhilfe-Einrichtungen und ähnliches liefern, so daß aufgrund dieser multifunktionalen Vorrichtung der schaltungstechnische Aufwand für die Realisierung der verschiedenen Fahrer-Assistenz-Systeme erheblich verringert wird. Dazu werden die Abstands-Sensoren je nach der zu lösenden Detektionsaufgabe von der Auswerteeinheit verschieden eingestellt, wobei jeweils eine Optimierung an die zu lösende Aufgabe angestrebt wird. Durch die flexible Ansteuerung der Abstands-Sensoren durch die Auswerteeinheit können die verfügbaren Ressourcen wie beispielsweise die begrenzte Rechenleistung oder auch die physikalisch bedingte Mindestbeobachtungsdauer eines Objektes optimal aufgeteilt werden. Dadurch ergibt sich insgesamt eine höhere Leistungsfähigkeit der Vorrichtung gegenüber einem festeingestellten Satz von Sensoren. Unter Abstands-Sensoren werden allgemein alle Sensoren verstanden, aus deren Meßsignalen auf den Abstand eines Objektes geschlossen werden kann, unabhängig davon, ob aus den Signalen noch andere Meßgrößen direkt ableitbar sind, wie beispielsweise die Geschwindigkeit bei einem Radarsensor. Unter Betriebsart der Abstands-Sensoren ist beispielsweise zu verstehen, ob nur eine Abstandsmessung vorgenommen wird, wie beispielsweise für eine Einparkhilfe, oder ob eine kombinierte Abstands- und Geschwindigkeitserfassung des Objektes vorgenommen wird. Weitere vorteilhafte Ausgestaltungen der Erfindung ergeben sich aus den Unteransprüchen.

Die Erfindung wird nachfolgend anhand eines bevorzugten Ausführungsbeispiels näher erläutert. Die Fig. zeigen:
- Fig. 1: eine schematische Draufsicht auf ein Kraftfahrzeug mit einer Vorrichtung zur Objekterfassung als Precrash-Sensorik,
- Fig. 2: eine schematische Draufsicht auf ein Kraftfahrzeug mit der Vorrichtung zur Objekterfassung als Bestandteil einer Precrash-Sensorik, eines ADR- Systems und einer Fahrspurwechsel-Einrichtung und
- Fig. 3: eine Draufsicht auf eine Anordnung mit Scan-Sensoren.

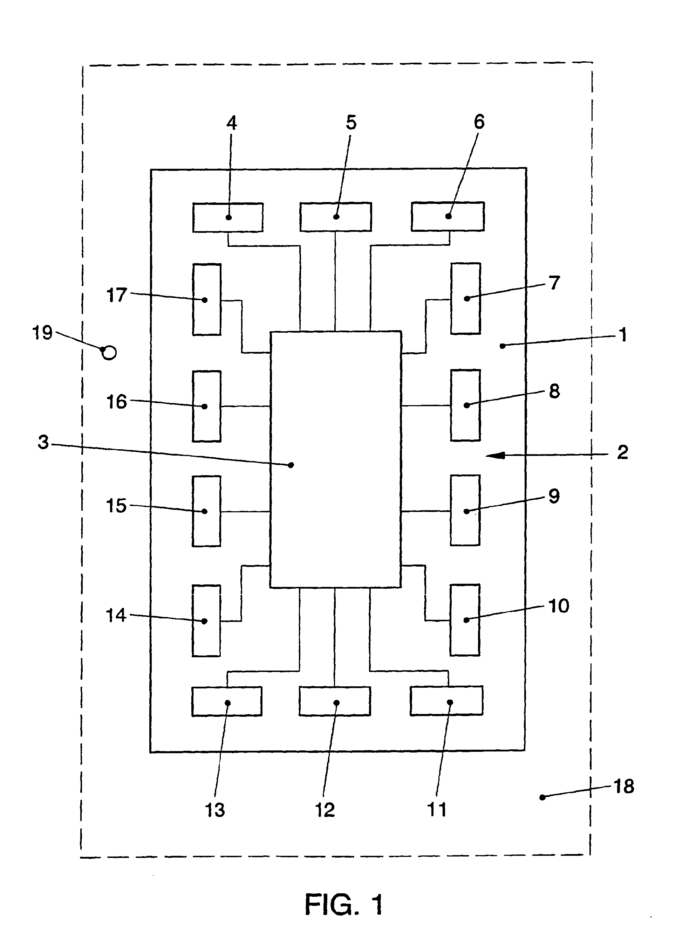

In der Fig. 1 ist in einer Draufsicht ein Kraftfahrzeug 1 mit einer Vorrichtung 2 zur Objekterfassung für eine Precrash-Sensorik oder eine aktive Kollisionsverhinderungs-Einrichtung in einer ersten Ausführungsform dargestellt. Die Vorrichtung 2 zur Objekterfassung umfaßt eine Auswerteeinheit 3 und eine Anzahl von Abstands-Sensoren 4-17, die um das Kraftfahrzeug 1 herum derart angeordnet sind, so daß diese 360° um das Kraftfahrzeug 1 herum abdecken. Die Abstands-Sensoren 4-17 sind mit der Auswerteeinheit 3 bidirektional verbunden, wobei die Abstands-Sensoren 4-17 Objektdaten an die Auswerteeinheit 3 liefern und die Auswerteeinheit 3 Steuersignale an die Abstands-Sensoren 4-17 liefert. Die Abstands-Sensoren 4-17 sind alle gleichförmig eingestellt, d.h. alle weisen die gleiche Reichweite von beispielsweise 6 m auf und erfassen eine Fahrzeugumgebung 18. Da die Rechenleistung der Auswerteeinheit 3 bei vertretbaren Herstellungskosten beschränkt ist, können die Abstands-Sensoren 4-17 nicht mit beliebig hohen Meßwiederholfrequenz betrieben werden. Daher werden die Abstands-Sensoren 4-17 einzeln oder gruppenweise ausgelesen, wobei beispielsweise eine Periodendauer von 20 ms gewählt wird. Tritt nun ein Objekt 19 in die Fahrzeugumgebung 18 ein, so wird dies beispielsweise von den Abstands -Sensoren 16,17 erfaßt. Mittels bekannter Algorithmen kann dann die Auswerteeinheit 3 auf den Abstand a und die Relativgeschwindigkeit Vᵣₑₗ schließen. Aus der Erfassung des Objektes 19 allein kann aber noch kein sicherer Schluß gezogen werden, ob es zu einer Kollision kommen kann oder nicht. Da aber andererseits die Precrash-Sensorik möglichst frühzeitig die Sicherheitskomponenten wie Airbag und Gurtstraffer auslösen muß, um deren optimale Wirkung zur Entfaltung zubringen, wird die Meßwiederholfrequenz der für das Objekt 19 relevanten Abstands-Sensoren 15-17 erhöht. Diese relevanten Abstands-Sensoren 15-17 überwachen nun das Objekt 19 mit einer erhöhen Meßwiederholfrequenz, wobei je nach Bewegung des Objektes 19 die relevanten Abstands-Sensoren sich ändern können. Die Nachführung der relevanten Abstands-Sensoren erfolgt mittels eines Tracking-Verfahrens. Das Tracking führt eine Vergangenheitsbewertung durch und verknüpft immer wieder aktuell erfaßte Ziele mit ihren entsprechenden "Tracks", die in einem der Auswerteeinheit zugeordneten Speicher abgelegt sind. Dadurch werden die Zustandsgrößen der Objekte gefiltert und es kann vorausschauend eine Position und/oder Geschwindigkeit prädiziert werden. Das Tracking füllt auch kurzzeitige Ausfälle der Detektion der Objekte auf, so daß insgesamt durch die Filterung, Mittelung und die Speicherung aller Informationen über einen Zeitraum von beispielsweise zehn Meßzyklen eine größere Sicherheit bei der Interpretation der Situation und eine erhöhte Schätzgenauigkeit der erfaßten Größen möglich ist. Darüber hinaus kann das Tracking durch das Zusammenfassen von mehreren Reflexionszentren an einem ausgedehnten Objekt, wie beispielsweise einem Kraftfahrzeug, neben den einzelnen getrackten Zentren Kombinationen derselben bilden, die zu einem physikalischen Objekt gehören. Weiterhin kann auch bei einem kurvenförmigen Verlauf der Fahrspur eine andere Priorisierung der Objekte bei der Vermessung erfolgen als bei einer Geradeausfahrt.

Die erhöhte Rechenleistung für die relevanten Abstands-Sensoren 15-17 bedingt eine Reduktion der Auswertung der anderen Abstands-Sensoren. Da jedoch die Überwachung des vorderen Verkehrsraumes weiterhin relevant bleibt, wird zunächst auf eine Auswertung der auf der gegenüberliegenden Seite befindlichen Abstands-Sensoren 7-10 verzichtet bzw. deren Meßwiederholfrequenz reduziert. Sollte zusätzliche Rechenleistung benötigt werden, so können zusätzlich die hinteren Abstands-Sensoren 11-13 abgeschaltet oder deren Meßwiederholfrequenz reduziert werden. Vorzugsweise wird zunächst versucht, die zur Verfügung stehende Rechenleistung nur durch eine Reduzierung der Meßwiederholfrequenz bzw. einer beschränkten Auswertung der anderen Abstands-Sensoren zu erreichen. Eine Möglichkeit besteht darin, stets eine Abstandsmessung vorzunehmen, jedoch die Geschwindigkeitserfassung mit einer geringen Auflösung (kurze Beobachtungsdauer des Objektes) durchzuführen, was bereits Rechenleistung einspart. Dadurch bleibt die Rundumüberwachung des Kraftfahrzeuges erhalten und möglicherweise zusätzlich auftretende Objekte werden weiterhin erfaßt. Sollte beispielsweise ein zweites Objekt erfaßt werden, so sind beide Objekte möglichst mit einer erhöhten Meßwiederholfrequenz zu verfolgen. Reicht die zur Verfügung stehende Rechenleistung trotz der Reduzierungsmaßnahmen für die anderen Sensoren nicht aus, so muß die Auswerteeinheit die beiden Objekte bewerten und den das kritischere Objekt verfolgenden Abstands-Sensoren Priorität einräumen. Die relevanten Abstands-Sensoren 15-17 verfolgen das Objekt 19 solange, bis feststeht, daß es unvermeidlich zu einer Kollision kommt oder aber das Objekt 19 wieder die Fahrzeugumgebung 18 verläßt. Bei Erkennung einer zu erwartenden Kollision werden durch die Auswerteeinheit 3 die betreffenden Airbags und Gurtstraffer ausgelöst. Die Abstands-Sensoren 4-17 sind jedoch nicht nur wahlweise und mit unterschiedlicher Meßwiederholfrequenz ansteuerbar, sondern auch hinsichtlich ihrer Reichweite veränderbar.

Die technische Realisierung einer veränderbaren Reichweite ist abhängig von der Art der verwendeten Abstands-Sensoren 4-17. In Frage kommen beispielsweise die Variation der abgestrahlten Leistung, eine Impuls-Blende-Funktion, ein veränderlicher Abstrahlwinkel und ähnliches. Die in Fig. 1 dargestellte Vorrichtung 2 kann nun ohne schaltungstechnische Modifikation auch für eine Einparkhilfe-Einrichtung verwendet werden. Dazu muß jedoch die Reichweite der Abstands-Sensoren 4-17 erniedrigt werden, deren Meßwiederholfrequenz erhöht und die Abstandsauflösung ebenfalls erhöht werden. Diese Umgestaltung kann manuell oder aber auch automatisch durch die Auswerteeinheit 3 erfolgen, beispielsweise durch Auswertung der eignen Geschwindigkeit und des eingelegten Gangs. Ähnlich wie bei der erhöhten Meßwiederholfrequenz zur Verfolgung des Objektes 19 muß Rechenleistung an anderer Stelle eingespart werden. Dies kann beispielsweise wieder durch Abschaltung einzelner Abstands-Sensoren 4-17 erfolgen, die im Moment keine relevanten Daten liefern könnten, aber auch durch Verzicht bestimmter Berechnungen. So ist beispielsweise die Bestimmung der Relativgeschwindigkeit Vᵣₑₗ eines Objektes 19 für eine Einparkhilfe-Einrichtung unwichtig.

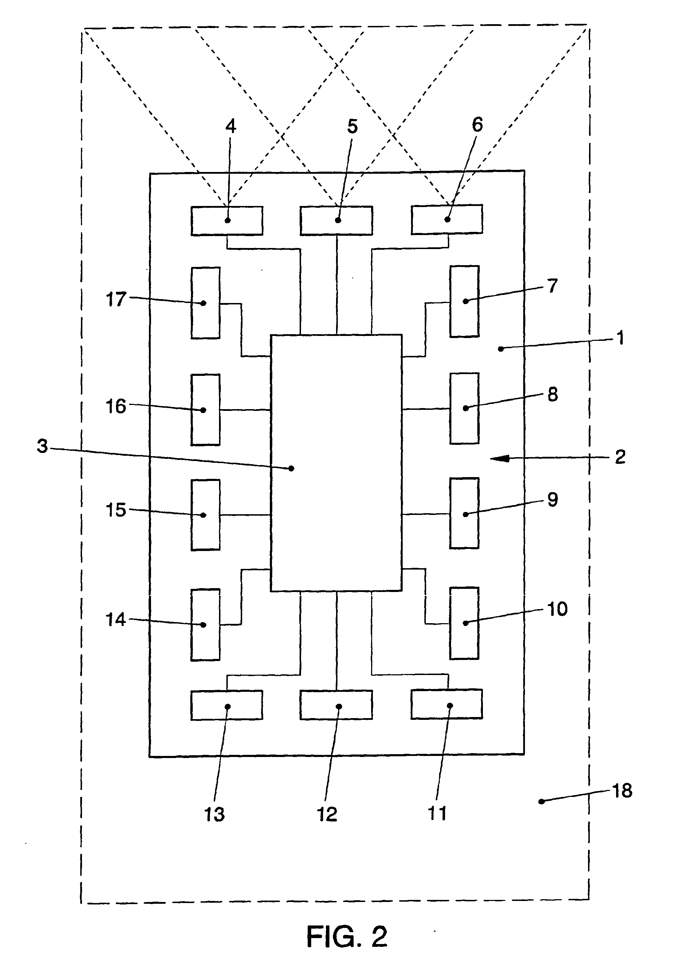

In der Fig. 2 ist eine zweite Ausführungsform dargestellt, bei der Vorrichtung 2 gleichzeitig Daten für drei Fahrer-Assistenz-Systeme liefert. Die Abstands-Sensoren 4-6 liefern dabei Daten für ein ADR-System, wozu die Abstands-Sensoren 4-6 mit einer größeren Reichweite angesteuert werden. Aufgrund des im Verhältnis zur Precrash-Sensorik zeitunkritischen Verhalten können diese jedoch mit einer geringeren Abtastrate angesteuert werden. Die Abstands-Sensoren 11-13 dienen für eine rückwärtige Warnung, beispielsweise die zu hohe und nicht angemessene Relativgeschwindigkeit des rückwärtigen Verkehrs auf das Kraftfahrzeug 1 zu, so der rückwärtige Verkehr mittels zusätzlicher Rückleuchten und der Kraftfahrzeugführer durch haptische, akustische und/oder optische Warnmittel gewarnt werden kann. Die Abstands-Sensoren 11-13 weisen analog der Abstands-Sensoren 4-6 eine große Reichweite von beispielsweise 20-30 m bei einer geringen Meßwiederholfrequenz auf. Die Abstands-Sensoren 7-10, 14-17 dienen vornehmlich wieder als Precrash-Sensorik, wobei diese aufgrund der geringen Meßwiederholfrequenz der Abstands-Sensoren 4-6, 11-13 mit einer höheren Abtastperidendauer von beispielsweise 10 ms betrieben werden können. Des weiteren liefern die Abstands-Sensoren 7-10, 14-17 Daten für eine Spurwechsel-Assistenz-Einrichtung. Allgemeines Problem beim Spurwechsel sind Objekte im toten Winkel der Rück- und Außenspiegel, wobei der Bereich des toten Winkels abhängig von der Spiegeleinstellung ist.

Wie aber bereits aus der Fig. 1 oder 2 leicht ersichtlich ist, erfassen die Abstands-Sensoren 7-10, 14-17 alle Objekte innerhalb einer gewissen Reichweite parallel zum Kraftfahrzeug 1 und somit auch im toten Winkel. Ähnlich wie bei bereits bekannten Spurwechsel-Assistenz-Systemen wird ein beabsichtigter Spurwechsel beispielsweise durch Betätigung des Fahrtrichtungsanzeigers oder durch Auswertung einer Fahrspurerkennung erkannt. Durch Erfassung der Spiegelstellungen durch die Auswerteeinheit 3 kann diese den Bereich des toten Winkels berechnen. Durch Auswertung der Daten der jeweiligen Abstands-Sensoren 7-10 oder 14-17 kann dann ein Objekt im toten Winkel erfaßt und an die Spurwechsel-Assistenz-Einrichtung gemeldet werden, die dann gegebenenfalls den Kraftfahrzeugführer haptisch oder akustisch warnt. Die zur Aktivierung der Spurwechsel-Assistenz-Einrichtung erwähnte Fahrspurerkennung kann ebenfalls über die Abstands-Sensoren 4-17 realisiert werden, beispielsweise durch Auswertung der Randbebauung und des Gegenverkehrs.

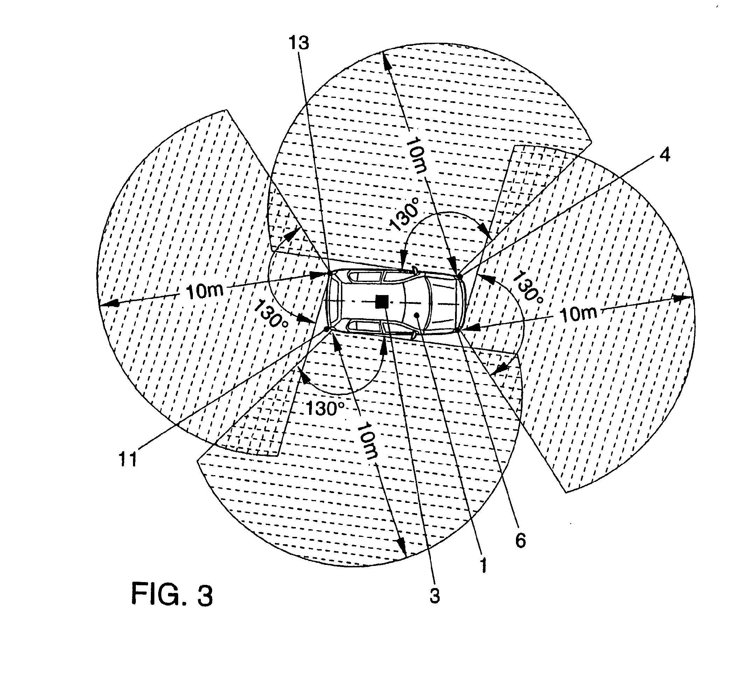

In der Fig. 3 ist eine alternative Ausführungsform zur Anordnung der Abstands-Sensoren 4, 6, 11, 13 dargestellt. Die Abstands-Sensoren 4, 6, 11, 13 sind dabei als Laser- und/oder Radar-Scanner-Sensoren ausgebildet und jeweils an den Ecken des Kraftfahrzeuges 1 angeordnet. Die Abstands-Sensoren 4, 6, 11, 13 weisen einen Scan-Bereich von 130° auf, so daß sie die Fahrzeugumgebung vollständig erfassen.

Wie gezeigt, dienen die Daten der Abstands-Sensoren 4-17 für eine Vielzahl von Fahrer-Assistenz-Systemen. Daher wird die Auswerteeinheit 3 vorzugsweise über einen CAN-Bus mit den einzelnen Steuergeräten der verschiedenen Fahrer-Assistenz-Systeme verbunden, so daß auch ein Datenaustausch zwischen den Fahrer-Assistenz-Systemen möglich ist.

## Patentansprüche

1. Vorrichtung zur Objekterfassung für Kraftfahrzeuge, umfassend eine durch eine Vielzahl von Abstands-Sensoren gebildete Abstands-Sensorik, die derart an dem Kraftfahrzeug (1) angeordnet ist, daß diese die Umgebung des Kraftfahrzeugs (1) mit einer Messwiederholfrequenz abtastet und eine Auswerteeinheit (3), die aus den periodisch ausgelesenen Daten der Abstands-Sensorik die Bewegungsbahn und die Geschwindigkeit eines Objektes relativ zu dem Kraftfahrzeug (1) ermittelt, **dadurch gekennzeichnet, daß** die Abstands-Sensoren (4-17) wahlweise durch die Auswerteeinheit (3) ansteuerbar sind und die Reichweite, die Betriebsart, die Meßwiederholfrequenz und die Auflösung der Abstands-Sensoren (4-17) veränderbar sind, wobei eine Rechenleistung der Auswerteeinheit (3) für ausgewählte Abstands-Sensoren (15-17) erhöhbar und für die übrigen Abstands-Sensoren (4-14) reduzierbar ist.

2. Vorrichtung zur Objekterfassung nach Anspruch 1, **dadurch gekennzeichnet, daß** die Abstands-Sensoren (4-17) als Radar-Frontend und/oder Infrarot-Sensoren und/oder Infrarot-Scanner und/oder Laser-Sensoren und/oder als Video-Kamera-System ausgebildet sind.

3. Vorrichtung zur Objekterfassung nach Anspruch 2, **dadurch gekennzeichnet, daß** die Antennen der Radar-Sensoren als Mikrostreifenantenne ausgebildet sind.

4. Vorrichtung nach einem der vorangehenden Ansprüche, **dadurch gekennzeichnet, daß** über die Auswerteeinheit (3) situationsabhängig einzelne Abstands-Sensoren (4-17) abschaltbar sind.

5. Vorrichtung nach einem der vorangehenden Ansprüche, **dadurch gekennzeichnet, daß** die Auswerteeinheit (3) über einen CAN-Bus mit den verschiedenen Steuergeräten der einzelnen Fahrer-Assistenz-Systemen verbunden ist.

6. Vorrichtung nach einem der vorangehenden Ansprüche, **dadurch gekennzeichnet, daß** die Abstands-Sensoren (4-17) wahlweise simultan und/oder sequentiell ansteuerbar sind.

7. Vorrichtung nach einem der vorangegangenen Ansprüche, **dadurch gekennzeichnet, daß** die Vorrichtung (2) zur Objekterfassung zum Erfassen von Objekten (19) im Bereich des toten Winkels des Kraftfahrzeuges (1) verwendet wird.

8. Verfahren zur Erfassung und Verfolgung von Objekten, mittels einer Vorrichtung nach einem der Ansprüche 1 bis 7, umfassend folgende Verfahrensschritte:
a) Erfassen der Fahrsituation des Kraftfahrzeuges durch Auswertung der Eigengeschwindigkeit und/oder der eingelegten Gangstufe,
b) Einstellen der Meßwiederholfrequenz, der Reichweite, der Auflösung und der Betriebsart der einzelnen Abstands-Sensoren (4-17),
c) Abtasten der Fahrzeugumgebung nach Objekten (19) innerhalb der eingestellten Reichweite der Abstands-Sensoren (4-17),
d) Übermitteln der erfaßten Objektdaten an die Auswerteeinheit (3),
e) Ermitteln des Abstandes und der Geschwindigkeit des oder der erfaßten Objekte (19),
f) Berechnen einer voraussichtlichen Bewegungsbahn der Objekte (19) zum Kraftfahrzeug (1) und klassifizieren der Objekte nach Gefährdungsrelevanz,
g) Auswählen der Abstands-Sensoren (15-17) im Bereich der voraussichtlichen Bewegungsbahn der Objekte (19),
h) Erhöhen der benötigten Rechenleistung für die ausgewählten Abstands-Sensoren (15-17) und Reduzieren der benötigten Rechenleistung für die übrigen Abstands-Sensoren (4-14) durch Verstellen der Reichweite und/oder der Betriebsart und/oder der Meßwiederholfrequenz und/oder der Auflösung,
i) Wiederholen der Verfahrensschritte d)-h) solange, bis das erfaßte Objekt (19) die Fahrzeugumgebung verläßt oder eine Kollision unvermeidlich erscheint oder eine andere Abbruchbedingung erfüllt ist und
j) Erzeugen von Steuersignalen für Fahrzeuginsassenrückhaltesysteme und/oder andere Fahrzeugassistenzsysteme durch die Auswerteeinheit (3), falls eine Kollision unvermeidlich oder eine Kraftfahrzeugführerreaktion notwendig ist.

9. Verfahren nach Anspruch 8, **dadurch gekennzeichnet, daß** bei Erfassung einer Einparksituation nach Verfahrensschritt a) die Abstands-Sensoren (4-17) auf maximale Meßwiederholfrequenz und Auflösung sowie auf eine Betriebsart ohne Auswertung der Geschwindigkeit eingestellt werden.

10. Verfahren nach Anspruch 8, **dadurch gekennzeichnet, daß** bei Erfassung einer Einparksituation nach Verfahrensschritt a) die Abstands-Sensoren (4-17) auf maximale Meßwiederholfrequenz und Auflösung eingestellt werden, wobei einzelne Abstands-Sensoren (4-17) abgeschaltet werden.

## Claims

1. Device for detecting objects for motor vehicles, comprising a distance sensor system which is formed by a plurality of distance sensors and which is arranged on the motor vehicle (1) in such a way that it senses the surroundings of the motor vehicle (1) with a measuring repetition frequency, and an evaluation unit (3) which determines, from the periodically read data of the distance sensor system, the movement path and the speed of an object relative to the motor vehicle (1),
**characterized in that**
the distance sensors (4-17) can be optionally actuated by the evaluation unit (3), and the range, the method of operation, the measuring repetition frequency and the resolution of the distance sensors (4-17) can be varied, wherein computing power of the evaluation unit (3) for selected distance sensors (15-17) can be increased and can be decreased for the other distance sensors (4-14).

2. Device for detecting objects according to Claim 1, **characterized in that** the distance sensors (4-17) are embodied as a radar front-end and/or infrared sensors and/or infrared scanners and/or laser sensors and/or as a video camera system.

3. Device for detecting objects according to Claim 2, **characterized in that** the antennas of the radar sensors are embodied as microstrip antennas.

4. Device according to one of the preceding claims, **characterized in that** individual distance sensors (4-17) can be switched off by means of the evaluation unit (3) as a function of the situation.

5. Device according to one of the preceding claims, **characterized in that** the evaluation unit (3) is connected via a CAN bus to the various control units of the individual driver assistance systems.

6. Device according to one of the preceding claims, **characterized in that** the distance sensors (4-17) can be optionally actuated simultaneously and/or sequentially.

7. Device according to one of the preceding claims, **characterized in that** the device (2) for detecting objects is used for detecting objects (19) in the region of the blind spot of the motor vehicle (1).

8. Method for sensing and tracking objects, by means of a device according to one of Claims 1 to 7, comprising the following method steps:
a) sensing of the driving situation of the motor vehicle by evaluating the motor vehicle's own speed and/or the engaged gear speed,
b) setting of the measuring repetition frequency, the range and the resolution and the method of operation of the individual distance sensors (4-17),
c) sensing of the surroundings of the vehicle for objects (19) within the set range of the distance sensors (4-17),
d) transmission of the sensed object data to the evaluation unit (3),
e) determination of the distance and of the speed of the sensed object or objects (19),
f) calculation of a predicted trajectory of the object (19) with respect to the motor vehicle (1) and classification of the object according to the hazard relevance,
g) selection of the distance sensors (15-17) in the vicinity of the expected trajectory of the objects (19),
h) increasing of the required computing power for the selected distance sensors (15-17) and decreasing of the required computing power for the other distance sensors (4-14) by adjusting the range and/or the method of operation and/or the measuring repetition frequency and/or the resolution,
i) repetition of the method steps d)-h) until the sensed object (19) leaves the surroundings of the vehicle or a collision appears unavoidable or another abort condition is met, and
j) generation of control signals for vehicle occupant restraint systems and/or other vehicle assistance systems by the evaluation unit (3) if a collision is unavoidable or a reaction by a motor vehicle driver is necessary.

9. Method according to Claim 8, **characterized in that** when a parking situation is sensed after method step a) the distance sensors (4-17) are set to maximum measuring repetition frequency and resolution and to a method of operation without evaluation of the speed.

10. Method according to Claim 8, **characterized in that** when a parking situation is sensed after method step a) the distance sensors (4-17) are set to maximum measuring repetition frequency and resolution, wherein individual distance sensors (4-17) are switched off.

## Revendications

1. Dispositif de détection d'objets pour des véhicules automobiles, comprenant
un ensemble de détecteurs de distance formé de plusieurs détecteurs de distance et disposé sur le véhicule automobile (1) de manière à détecter l'environnement du véhicule automobile (1) à une fréquence de répétition de mesure et
une unité d'évaluation (3) qui détermine la trajectoire de déplacement et la vitesse d'un objet par rapport au véhicule automobile (1) à partir des données lues périodiquement de l'ensemble de détecteurs de distance,
**caractérisé en ce que**
les détecteurs de distance (4-17) peuvent être commandés sélectivement par l'unité d'évaluation (3),
**en ce que** la portée, le mode de fonctionnement, la fréquence de répétition de mesure et la résolution des détecteurs de distance (4-17) peuvent être modifiés et
**en ce que** la puissance de calcul de l'unité d'évaluation (3) peut être augmentée pour des détecteurs de distance (15-17) sélectionnés et peut être réduite pour les autres détecteurs de distance (4-14).

2. Dispositif de détection d'objets selon la revendication 1, **caractérisé en ce que** les détecteurs de distance (4-17) sont configurés comme radar avant, détecteurs infrarouge, scanner infrarouge, détecteur laser et/ou système de caméra vidéo.

3. Dispositif de détection d'objets selon la revendication 2, **caractérisé en ce que** les antennes des détecteurs radar sont configurées comme antennes microbande.

4. Dispositif selon l'une des revendications précédentes, **caractérisé en ce que** certains détecteurs de distance (4-17) peuvent être débranchés par l'unité d'évaluation (3) en fonction de la situation.

5. Dispositif selon l'une des revendications précédentes, **caractérisé en ce que** l'unité d'évaluation (3) est reliée par un bus CAN aux différents appareils de commande des différents systèmes d'assistance au conducteur.

6. Dispositif selon l'une des revendications précédentes, **caractérisé en ce que** les détecteurs de distance (4-17) peuvent être commandés sélectivement de manière simultanée et/ou séquentielle.

7. Dispositif selon l'une des revendications précédentes, **caractérisé en ce que** le dispositif (2) de détection d'objets est utilisé pour détecter des objets (19) dans la zone de l'angle mort du véhicule automobile (1).

8. Procédé de détection et de suivi d'objets au moyen d'un dispositif selon l'une des revendications 1 à 7, le procédé comportant les étapes suivantes :
a) détecter la situation de conduite du véhicule automobile par évaluation de sa vitesse propre et/ou du rapport de transmission engagé,
b) régler la fréquence de répétition de mesure, la portée, la résolution et le mode de fonctionnement des différents détecteurs de distance (4-17),
c) rechercher dans l'environnement du véhicule des objets (19) dans la portée des détecteurs de distance (4-17) qui a été réglée,
d) transmettre les données d'objets saisis à l'unité d'évaluation (3),
e) déterminer la distance et la vitesse du ou des objets (19) saisis,
f) calculer une trajectoire prévisible des objets (19) vers le véhicule automobile (1) et classer les objets selon le risque encouru,
g) sélectionner les détecteurs de distance (15-17) dans la zone de la trajectoire prévisible de déplacement des objets (19),
h) augmenter la puissance de calcul nécessaire pour les détecteurs de distance (15-17) sélectionnés et réduire la puissance de calcul nécessaire pour les autres détecteurs de distance (4-14) par ajustement de la portée, du mode de fonctionnement, de la fréquence de répétition de mesure et/ou de la résolution,
i) répéter les étapes de traitement c) à h) jusqu'à ce que l'objet (19) saisi quitte l'environnement du véhicule, qu'une collision apparaît être inévitable ou qu'une autre condition d'interruption soit satisfaite et
j) faire produire par l'unité d'évaluation (3) des signaux de commande pour les systèmes de retenue des passagers du véhicule et/ou d'autres systèmes d'assistance au véhicule au cas où une collision est inévitable ou qu'une réaction du conducteur du véhicule automobile est nécessaire.

9. Procédé selon la revendication 8, **caractérisé en ce que** lors de la détection d'une situation de manoeuvre de stationnement, après l'étape de traitement a), les détecteurs de distance (4-17) sont réglés sur la fréquence maximale de répétition de mesure et sur la résolution maximale ainsi que sur un mode de fonctionnement sans évaluation de la vitesse.

10. Procédé selon la revendication 8, **caractérisé en ce que** lors de la détection d'une situation de manoeuvre de stationnement, après l'étape de traitement a), les détecteurs de distance (4-17) sont réglés sur la fréquence maximale de répétition de mesure et sur la résolution maximale, certains détecteurs de distance (4-17) étant débranchés.
